# EUROPÄISCHE PATENTSCHRIFT

(11) **EP 0 682 984 B1**
(45) Veröffentlichungstag und Bekanntmachung des Hinweises auf die Patenterteilung: **25.08.1999**
(21) Anmeldenummer: 95107452.5
(22) Anmeldetag: 17.05.1995
(51) Int. Cl.: B03B 1/00, B09B 5/00

(54) **Verfahren und Vorrichtung zum Entsorgen von Elementen mit beschichteter Oberfläche**
Method and device for the disposal of surface-coated elements
Procédé et dispositif pour l'élimination d'éléments à surface revêtue

(30) Priorität: 20.05.1994 DE 4417704
(43) Veröffentlichungstag der Anmeldung: 22.11.1995
(73) Patentinhaber: Färber, Herbert, D-70376 Stuttgart (DE)
(72) Erfinder:
(74) Vertreter: Otte, Peter, Dipl.-Ing.

(56) Entgegenhaltungen:
- DE-A- 3 921 168
- DE-A- 4 216 226
- DE-U- 9 408 334
- US-A- 4 504 505

## Beschreibung

Die Erfindung betrifft ein Verfahren zum Entsorgen von eine beschichtete Oberfläche aufweisenden Elementen, inbesondere natürlichen und künstlichen Holzelementen durch Entfernen der Oberflächenbeschichtung.

Dabei ist zu beachten, daß die in der vorliegenden Anmeldung durchgehend verwendeten Begriffe beschichtete Oberfläche und Oberflächenbeschichtungen alle möglichen Arten von beschichteten bzw. behandelten Oberflächen betreffen, die zu einer gegenüber einem Basismaterial anderen bzw. veränderten Materialstruktur mit vorgegebener Dicke bzw. Tiefe führen, wobei neben dem Beschichten im engeren Sinne, beispielsweise durch Aufbringen einer Kunststoffschicht auch andere, die Oberfläche bis auf eine gewisse Tiefe verändernde Behandlungsform, wie z.B. Glasieren, Beizen, Imprägnieren mit Holzschutzmitteln usw. umfaßt werden.

Bei Elementen mit einer Oberflächenbeschichtung, insbesondere bei natürlichen und künstlichen Holzteilen ist es bereits versucht worden, die Oberflächenschicht, beispielsweise eine Lackschicht oder eine Kunststoffschicht zu entfernen und die Platte oder dergleichen anschließend mit einer neuen Beschichtung zu versehen oder zu verbrennen. Das Abtragen der Oberflächenbeschichtung erfolgt dabei durch Abschaben oder Abschleifen ggf. unter Verwendung von Abbeizmitteln.

Die zunehmenden Anforderungen an eine Verringerung der Umweltbelastung und auch die hohen Kosten für die Entsorgung von beschichteten Materialien, die wie z. B. Spanplatten, nicht ohne weiteres verbrannt werden dürfen, zwingen dazu, nach neuen Wegen für die Entsorgung von eine beschichtete Oberfläche aufweisenden Elementen zu suchen.

Der Erfindung liegt die Aufgabe zugrunde, verbesserte Möglichkeiten für die Trennung einer Oberflächenbeschichtung von einem sie tragenden Element, insbesondere einem natürlichen und künstlichen Holzelement anzugeben und damit die Möglichkeit für eine separate Entsorgung der Oberflächenbeschichtung einerseits und des Trägermaterials andererseits bzw. für eine Wiederverwendung mindestens eines der beiden Bestandteile zu schaffen.

Die gestellte Aufgabe wird bei einem Verfahren der eingangs angegebenen Art gemäß der Erfindung dadurch gelöst, daß die Oberflächenbeschichtung mit einer Schicht eines Markiermaterials versehen wird, welches sich durch mindestens eine besondere Eigenschaft von den übrigen Bestandteilen des oberflächenbeschichteten Elements unterscheidet, daß das beschichtete Element dann einschließlich der Oberflächenbeschichtung und des daran vorgesehenen Markiermaterials zu Partikeln zerkleinert wird und daß diejenigen Partikel, welche Teile des Markiermaterials aufweisen, dann unter Auswertung der besonderen Eigenschaft des Markiermaterials von den übrigen Partikeln getrennt und entsorgt werden.

In diesem Zusammenhang ist darauf hinzuweisen, daß bei der Zerkleinerung der zu entsorgenden Elemente stets Partikel mit folgenden Bestandteilen entstehen: Markiermaterial, Oberflächenschicht bei beschichteten Grundkörpern bzw. durch Oberflächenbehandlung verändertes Material des Grundkörpers aus Oberflächenbereichen des behandelten Elementes und unbeschichtete bzw. unbehandelte Teile des Grundkörpers ohne Markiermaterial. Außerdem wird grundsätzlich immer ein gewisser Anteil des unbehandelten Grundmaterials mit abgetragen, wobei die Abtragstiefe durch den Zerkleinerungsgrad beeinflußt wird.

Es ist ein besonderer Vorteil des erfindungsgemäßen Verfahrens, daß durch das Anbringen eines Markiermaterials eine Trennung der Materialien der Oberflächenbeschichtung einerseits und des sie tragenden Materials andererseits ermöglicht wird, wobei es sich in Ausgestaltung der Erfindung besonders bewährt hat, wenn das Markiermaterial durch ein magnetisierbares Material gebildet wird, da hierdurch die Möglichkeit eröffnet wird, alle nach der Zerkleinerung vorhandenen Partikel mit Teilen des Markiermaterials magnetisch von den übrigen Partikeln zu trennen.

Es besteht aber auch die Möglichkeit, andere gezielt ausgewählte Eigenschaften des Markiermaterials zu nutzen, beispielsweise ein erhöhtes spezifisches Gewicht desselben, welches die Möglichkeit eröffnet, diejenigen Partikel, welche durch das daran haftende Markiermaterial schwerer sind als die übrigen Partikel, beispielsweise durch einen Zyklon von den übrigen Partikeln zu trennen oder auch bei einem aus einem relativ leichten Kunststoff bestehenden Träger durch Separierung in einem Flüssigkeitsbad, in dem die schwereren Partikel nach unten absinken, während die leichteren Partikel schwimmen.

Ein wichtiger Vorteil des Verfahrens gemäß der Erfindung besteht zunächst einmal darin, daß überhaupt die Möglichkeit geschaffen wird, die Oberflächenbeschichtung von ihrem Trägermaterial zu entfernen, wobei die Partikelgröße und das Zerkleinerungsverfahren unter Berücksichtigung der Art der Oberflächenbeschichtung, des Trägermaterials und des Markiermaterials in weiten Grenzen frei gewählt werden können, um optimale Ergebnisse zu erzielen. Die in der Praxis anwendbaren Zerkleinerungsverfahren reichen dabei von einem relativ feinen Schleifen bis zu einem relativ groben Schreddern des beschichteten Elementes.

Sobald die Partikel, welche teilweise die Oberflächenbeschichtung aufweisen, von den übrigen Partikeln getrennt sind, besteht dann die Möglichkeit, die im Vergleich zur Materialmenge des ganzen oberflächenbeschichteten Elements relativ geringe Menge von Partikeln zu entsorgen, die zumindest teilweise aus dem Material der Oberflächenbeschichtung, beispielsweise einem Lack, einer Imprägnierung oder einem Kunststoffmaterial gezielt zu entsorgen und beispielsweise in einer Sondermüll-Verbrennungsanlage zu verbrennen. Das übrige Material kann dann gefahrlos deponiert oder wieder aufbereitet werden. Beispielsweise hat es sich gezeigt, daß bei der Zerspanung von Holzelementen mit einer Oberflächenbeschichtung das zerspante Restholz, welches zumindest im wesentlichen frei von Bestandteilen der ursprünglichen Oberflächenbeschichtung ist, für die Herstellung von Spanplatten, insbesondere für die Mittelschicht solcher Spanplatten, hervorragend geeignet ist. Auch bezüglich der mit Teilen der Oberflächenbeschichtung versehenen Partikel ergeben sich je nach Material der Oberflächenbeschichtung ggf. Möglichkeiten für eine Wiederverwendung. Auf jeden Fall besteht aber in vorteilhafter Ausgestaltung der Erfindung die Möglichkeit, bei Verwendung eines Markiermaterials aus magnetisierbaren Metallpartikeln und Wachs, das Wachs aus den abgetrennten Partikeln herauszuschmelzen und das magnetisierbare Material mit Hilfe magnetischer Einrichtungen zurückzugewinnen.

Während die Separierung von mit Material der Oberflächenbeschichtung versehenen Partikeln von den übrigen Partikeln unter Ausnutzung der magnetischen Eigenschaften des Markiermaterials derzeit bevorzugt wird, versteht es sich, daß wie weiter oben bereits angedeutet, auch zahlreiche andere Möglichkeiten für eine Partikelseparierung unter Ausnutzung anderer Eigenschaften des Markiermaterials bestehen. Insbesondere besteht bei Verwendung eines nicht magnetisierbaren metallischen Markiermaterials, wie z. B. Aluminium, die Möglichkeit, zumindest teilweise metallisierte Partikel mit Hilfe von Wirbelstromdetektoren zu erfassen und beispielsweise mittels gesteuerter Düsen aus dem Partikelstrom herauszublasen, der in diesem Fall allerdings so geführt werden sollte, daß die Partikel den Detektor und die Blasdüse in einem stark vereinzelten Zustand bzw. als schwacher Partikelstrom passieren. Gegebenenfalls können aber Erschwernisse bei der Abscheidung von Partikeln mit Materialanteilen der Oberflächenbeschichtung in Kauf genommen werden, wenn sich dadurch Vorteile bei der Zerkleinerung des beschichteten Gegenstandes ergeben. Insbesondere ist in diesem Zusammenhang der Energiebedarf für die Zerkleinerung zu berücksichtigen, der je nach Art des zu zerkleinernden Materials in weiten Grenzen schwanken kann.

Weitere Einzelheiten und Vorteile der Erfindung werden nachstehend anhand einer Zeichnung noch näher erläutert.

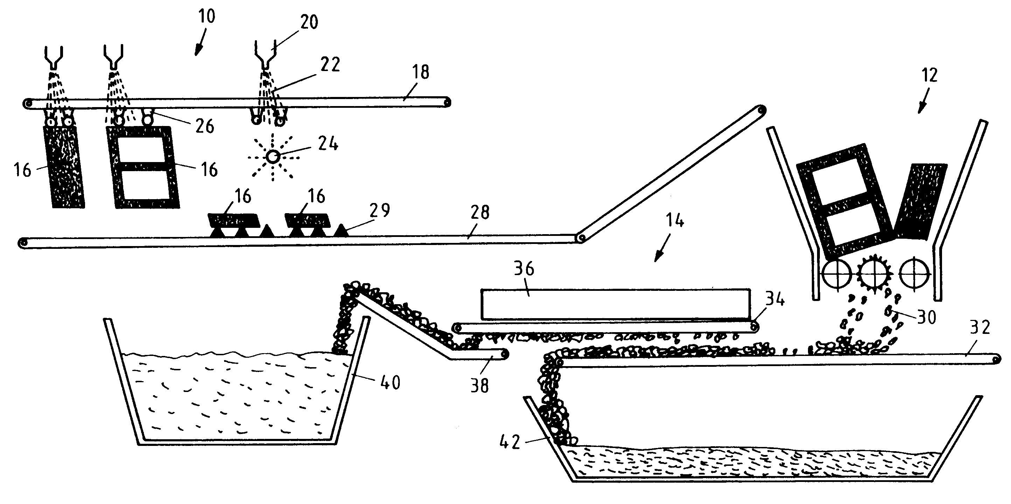

Die einzige Figur der Zeichnung zeigt eine schematische Darstellung einer Vorrichtung bzw. einer Anlage zur Durchführung des erfindungsgemäßen Verfahrens.

Im einzelnen zeigt die Zeichnung eine Vorrichtung bzw. eine Anlage mit Markiereinrichtungen 10, mit Zerkleinerungseinrichtungen 12 und mit Separiereinrichtungen 14.

Mit Hilfe der Markiereinrichtungen 10 werden zu entsorgende, eine beschichtete Oberfläche aufweisende Elemente 16, wie z. B. alte Fensterrahmen oder sonstige mit einer Lackschicht oder einer anderen Oberflächenbeschichtung versehene Holzteile mit Hilfe eines ersten Förderbandes 18 an Sprühdüsen 20 vorbeibewegt, mit deren Hilfe auf der gesamten, frei zugänglichen Oberfläche der beschichteten Elemente eine Schicht aus einem Markierungsmaterial 22 aufgebracht wird, das den Düsen aus einer geeigneten Quelle (nicht gezeigt) mit einem geeigneten Druck zugeführt wird. Dabei soll bezüglich des betrachteten Ausführungsbeispiels davon ausgegangen werden, daß es sich bei dem von den Düsen versprühten Markiermaterials um ein Gemisch aus magnetisierbaren Metallpartikeln und einer durch Erwärmen in den flüssigen Zustand gebrachten wachsartigen Substanz handelt.

Nach dem Aufbringen einer Schicht des Markiermaterials 22 werden die zu entsorgenden Elemente 16, beispielsweise unter Steuerung durch eine Fotozelle 24 oder auch rein mechanisch von den sie zunächst tragenden Halterungen 26 des ersten Förderbandes 18 gelöst und auf ein zweites Förderband 28 abgeworfen, welches wie in der Zeichnung angedeutet, beispielsweise mit Dornen oder Haken 29, versehen sein kann, um die Elemente 16 zuverlässig mitzunehmen, wenn sie von dem ersten Förderband 18 abgeworfen werden.

Das zweite Förderband 28 transportiert die zu entsorgenden, mit Markiermaterial beschichteten Elemente 16 zu den Zerkleinerungseinrichtungen 12, die beispielsweise einen handelsüblichen Schredder umfassen können. Die Elemente 16 werden dann in den als Schredder dargestellten Zerkleinerungseinrichtungen 12 vollständig, d. h. inklusive Oberflächenbeschichtung, Trägermaterial und Markiermaterial zu Partikeln 30 der gewünschten Größe zerkleinert. Die Partikel 30 werden auf ein drittes Förderband 32 abgeworfen und durch dieses von der Auslaßseite der Zerkleinerungseinrichtung 12 weg zu den Separiereinrichtungen 14 transportiert.

Die Separiereinrichtungen 14 umfassen beim Ausführungsbeispiel ein viertes Förderband 34, welches teilweise parallel zu dem dritten Förderband 32 und in einem relativ geringen Abstand von diesem verläuft. Auf der Innenseite des dem dritten Förderband 32 und den Materialpartikeln 30 zugewandten unteren Trumms des vierten Förderbandes 34 befinden sich Permanentmagnete oder Elektromagnete 36, die sich längs des vierten Förderbandes 34 bis zu einer Position jenseits des ausgangsseitigen Endes des dritten Förderbandes 32 und oberhalb eines fünften Förderbandes 38 erstrecken, welches mit seinem auslaßseitigen Ende oberhalb eines Abfallbehälters 40 angeordnet ist.

Wenn bei der als Ausführungsbeispiel betrachteten Anlage der Partikelstrom vom Auslaß der Zerkleinerungseinrichtungen 12 mit Hilfe des dritten Förderbandes 32 in den Überlappungsbereich zwischen diesem und dem vierten Förderband 34 transportiert wird, dann werden diejenigen Partikel 30, an denen Teile des magnetisierbaren Markiermaterials vorhanden sind, durch die Magnete 36 gegen die Unterseite des unteren Trumms des vierten Förderbandes 34 gezogen, so daß nur das im vorliegenden Fall wiederverwendbare, geschredderte Holzmaterial vom auslaßseitigen Ende des dritten Förderbandes 32 in einen dort angeordneten Sammelbehälter 42 gelangt und erneut verwendet werden kann, beispielsweise zur Herstellung von Spanplatten. Die Partikel 30 mit dem Markiermaterial werden dagegen von dem vierten Förderband weitertransportiert, bis sie eine Position erreichen, in der die magnetische Haltekraft der Magnete 36 endet. Zu diesem Zeitpunkt befinden sich die Partikel mit dem magnetisierbaren Markiermaterial bereits über dem eingangsseitigen Teil des fünften Förderbandes 38 und werden von diesem aufgenommen, sobald sie von der Unterseite des unteren Trumms des vierten Förderbandes herabfallen. Diese Partikel, welche ganz oder teilweise aus der zu entfernenden Oberflächenbeschichtung und der daran haftenden Schicht des Markiermaterials bestehen, werden dann vom auslaßseitigen Ende des fünften Förderbandes 38 in den Abfallbehälter 40 abgeworfen, wobei es sich versteht, daß die sich in dem Abfallbehälter 40 sammelnde Materialmenge wesentlich geringer ist als die ursprünglich in Form der Elemente 16 angelieferte Materialmenge und beispielsweise nur etwa 1 bis 5% dieser Menge ausmacht. Eine derart geringe Materialmenge ist aber relativ kostengünstig und mit vergleichsweise geringem Aufwand zu entsorgen, wobei beim Ausführungsbeispiel zusätzlich die Möglichkeit besteht, den Wachsanteil des Markiermaterials zumindest weitgehend auszuschmelzen und den magnetisierbaren Metallanteil magnetisch zu entfernen, was jedoch in der Zeichnung der Übersichtlichkeit halber nicht besonders dargestellt ist.

Abweichend von dem erläuterten Ausführungsbeispiel besteht die Möglichkeit, das obere Transportband nur für den Transport größerer Teile zu verwenden, die dann unmittelbar in die Zerkleinerungseinrichtungen 12 abgeworfen werden, während mit Hilfe des mit Dornen oder Haken 29 versehenen zweiten Förderbandes 28 kleinere Teile bzw. Bruchstücke von größeren Elementen zu den Zerkleinerungseinrichtungen 12 transportiert werden, wobei es sich versteht, daß in diesem Fall separat für eine Beschichtung dieser Elemente mit einem Markiermaterial gesorgt werden muß.

Aus der vorstehenden Beschreibung wird deutlich, daß es gemäß der Erfindung möglich ist, eine beschichtete Oberfläche relativ einfach und zuverlässig von dem sie tragenden Trägermaterial zu trennen und auf diese Weise die kritische Abfallmenge dramatisch zu reduzieren. Dabei bietet das erfindungsgemäße Verfahren den besonderen Vorteil, daß es auf die Oberflächenform der zu entsorgenden Elemente wegen des Besprühens derselben mit Markiermaterial nicht wesentlich ankommt, so daß beispielsweise alte Fensterrahmen mit zahlreichen Falzen und ggf. Metallsplittern und Kittresten so aufgearbeitet werden können, daß der Holzanteil in reiner Form einer neuen Verwendung zugeführt werden kann.

## Patentansprüche

1. Verfahren zum Entsorgen von eine beschichtete Oberfläche aufweisenden Elementen, insbesondere natürlichen und künstlichen Holzelementen, durch Entfernen der Oberflächenbeschichtung, **dadurch gekennzeichnet**, daß die Oberflächenbeschichtung mit einer Schicht eines Markiermaterials versehen wird, welches sich durch mindestens eine besondere Eigenschaft von den übrigen Bestandteilen des oberflächenbeschichteten Elements unterscheidet, daß das beschichtete Element dann einschließlich der Oberflächenbeschichtung und des daran vorgesehenen Markiermaterials zu Partikeln zerkleinert wird und daß dann diejenigen Partikel, welche Teile des Markiermaterials aufweisen, unter Auswertung der besonderen Eigenschaft des Markiermaterials von den übrigen Partikeln getrennt und entsorgt werden.

2. Verfahren nach Anspruch 1, **dadurch gekennzeichnet**, daß als Markiermaterial ein mit Hilfe von Detektoreinrichtungen detektierbares Metallmaterial verwendet wird.

3. Verfahren nach Anspruch 2, **dadurch gekennzeichnet**, daß als Metallmaterial ein magnetisierbares Material verwendet wird.

4. Verfahren nach einem der Ansprüche 1 bis 3, **dadurch gekennzeichnet**, daß als Markiermaterial ein Material verwendet wird, dessen spezifisches Gewicht von den spezifischen Gewichten der anderen Materialien des beschichteten Elementes verschieden ist.

5. Verfahren nach Anspruch 4, **dadurch gekennzeichnet**, daß ein Markiermaterial mit einem spezifischen Gewicht gewählt wird, welches höher ist als das spezifische Gewicht aller übrigen Bestandteile des beschichteten Elements.

6. Verfahren nach einem der Ansprüche 1 bis 5, **dadurch gekennzeichnet**, daß das Markiermaterial unter Verwendung eines Bindemittels auf die freie Oberfläche der Oberflächenbeschichtung aufgebracht wird.

7. Verfahren nach Anspruch 6, **dadurch gekennzeichnet**, daß als Bindemittel eine wachsartige Substanz verwendet wird.

8. Verfahren nach Anspruch 6 oder 7, **dadurch gekennzeichnet**, daß zuerst das Bindemittel auf die freie Oberfläche der Oberflächenbeschichtung aufgebracht wird und anschließend das Markiermaterial.

9. Verfahren nach Anspruch 6 oder 7, **dadurch gekennzeichnet**, daß das Markiermaterial und das Bindemittel zuerst gemischt werden, und daß die so erhaltene Mischung dann auf die freie Oberfläche der Oberflächenbeschichtung aufgebracht wird.

## Claims

1. A process for the disposal of surface-coated articles, in particular natural and synthetic wood articles, by removal of the surface coating, characterised in that the surface coating is provided with a layer of a marking material differing from the other constituents of the surface-coated article in at least one special property, in that the coated article, inclusive of the surface coating and the marking material provided thereon, is then comminuted into particles, and in that those particles with fragments of the marking material are then separated from the remaining particles, by utilising the special property of the marking material, and disposed of.

2. A process according to claim 1, characterised in that a metal material, detectable by means of detecting devices, is used as a marking material.

3. A process according to claim 2, characterised in that a magnetisable material is used as a metal material.

4. A process according to any one of claims 1 to 3, characterised in that a material having a specific weight different from the specific weights of the other materials of the coated article is used as a marking material.

5. A process according to claim 4, characterised in that a marking material is selected which has a specific weight higher than the specific weight of all the remaining constituents of the coated article.

6. A process according to any one of claims 1 to 5, characterised in that the marking material is applied to the free surface of the surface coating using a binder.

7. A process according to claim 6, characterised in that a wax-type substance is used as a binder.

8. A process according to claim 6 or 7, characterised in that first the binder is applied to the free surface of the surface coating and then the marking material.

9. A process according to claim 6 or 7, characterised in that the marking material and the binder are first mixed, and in that the mixture thus obtained is then applied to the free surface of the surface coating.

## Revendications

1. Procédé pour l'élimination d'éléments présentant une surface revêtue, en particulier d'éléments en bois naturel et synthétiques, par enlèvement du revêtement de surface,
caractérisé en ce que
le revêtement de surface est doté d'une couche d'un matériau de marquage qui se distingue des autres constituants de l'élément revêtu en surface par au moins une propriété particulière, en ce que l'élément revêtu est ensuite broyé, y compris le revêtement de surface et le matériau de marquage prévu sur celui-ci, pour donner des particules, et en ce que les particules qui présentent des parties du matériau de marquage sont séparées des autres particules, par exploitation de la propriété particulière du matériau de marquage, et sont éliminées.

2. Procédé selon la revendication 1,
caractérisé en ce qu'
on utilise comme matériau de marquage un matériau métallique détectable à l'aide de dispositifs détecteurs.

3. Procédé selon la revendication 2,
caractérisé en ce qu'
on utilise comme matériau métallique un matériau magnétisable.

4. Procédé selon l'une des revendications 1 à 3,
caractérisé en ce qu'
on utilise comme matériau de marquage un matériau dont le poids spécifique est différent des poids spécifiques des autres matériaux de l'élément revêtu.

5. Procédé selon la revendication 4,
caractérisé en ce qu'
on choisit un matériau de marquage ayant un poids spécifique supérieur au poids spécifique de tous les autres constituants de l'élément revêtu.

6. Procédé selon l'une des revendications 1 à 5,
caractérisé en ce que
le matériau de marquage est appliqué avec utilisation d'un liant sur la surface libre du revêtement de surface.

7. Procédé selon la revendication 6,
caractérisé en ce qu'
on utilise comme liant une substance du genre cire.

8. Procédé selon la revendication 6 ou 7,
caractérisé en ce que
d'abord, on applique le liant sur la surface libre du revêtement de surface, Puis on applique le matériau de marquage.

9. Procédé selon la revendication 6 ou 7,
caractérisé en ce que
le matériau de marquage et le liant sont d'abord mélangés, et en ce que le mélange ainsi obtenu est ensuite appliqué sur la surface libre du revêtement de surface.
